# EUROPÄISCHE PATENTSCHRIFT

(11) **EP 1 867 154 B1**
(45) Veröffentlichungstag und Bekanntmachung des Hinweises auf die Patenterteilung: **28.12.2016**
(21) Anmeldenummer: 06725343.5
(22) Anmeldetag: 28.03.2006
(51) Int. Cl.: H04N 5/775, H04N 5/781, H04N 5/85, H04N 5/76, H04N 5/907, H04N 9/804, H04N 21/2747

(54) **VERFAHREN UND ANORDNUNG ZUM SPEICHERN UND WIEDERGEBEN VON TV-SENDUNGEN**
METHOD AND ARRANGEMENT FOR STORING AND PLAYING BACK TV PROGRAMMES
PROCEDE ET SYSTEME POUR STOCKER ET LIRE DES EMISSIONS TV

(30) Priorität: 30.03.2005 US 666423 P
(43) Veröffentlichungstag der Anmeldung: 19.12.2007
(73) Patentinhaber: Nokia Solutions and Networks GmbH & Co. KG, 81541 Munich (DE)
(72) Erfinder: STELZL, Rudolf, 85221 Dachau (DE); JENZOWSKY, Stefan, DE / 82166 Gräfelfing (DE); SCHEUER, Axel, 80804 München (DE); SCHWEICKHARDT, Harald, 81479 München (DE); HIELSCHER, Christoph, 80801 München (DE)
(74) Vertreter: Weidel, Gottfried
(86) Internationale Anmeldenummer: PCT/EP2006/061079
(87) Internationale Veröffentlichungsnummer: WO 2006/103223

(56) Entgegenhaltungen:
- WO-A-00/04706
- US-A1- 2004 240 840
- US-A1- 2005 002 638

## Beschreibung

Die vorliegende Erfindung betrifft ein Verfahren und einen PVR Server zum Speichern und Wiedergeben von TV-Sendungen. Insbesondere liefert die vorliegende Erfindung ein verbessertes Verfahren für den Betrieb eines Netzwerk-PVR und einen verbesserten PVR Server.

Aus der Druckschrift WO2005/004483 ist ein ähnliches PVR Server benannt.

Aus der Druckschrift US 2004/0240840 A1 ist ein System bekannt zum Aufnehmen und zur Wiedergabe von Fernsehsignalen einer Mehrzahl von Fernsehkanälen, welches eine Computerbasierte steuernde zentrale Einheit umfasst, welche verbind-bar mit einem Telekommunikationsnetz ist, sowie eine Mehrzahl von Fernsehempfängern, welche mit der steuernden zentralen Einheit verbunden sind.

Nachdem bandbasierte analoge Videoaufzeichnungsgeräte über Jahrzehnte hinweg für Heimanwender die einzige Möglichkeit darstellten, über Antennen-, Kabel- oder Satellitenfernsehen ausgestrahlte Sendungen aufzuzeichnen und komfortabel aufzubewahren, gibt es nach dem Verfügbarwerden schneller und gleichzeitig preiswerter Videoprozessoren und leistungsfähiger Videocodecs wie etwa MPEG2 (1994) und MPEG4 (1998) seit einigen Jahren eine Reihe von meist festplattenbasierten digitalen Geräten, die neben der reinen Videoaufzeichnung eine Reihe von Komfortfunktionen bieten.

Diese neue Gerätegeneration wird häufig als persönlicher Videorekorder (PVR), mitunter auch als digitaler Videorecorder (DVR) bezeichnet. Während diese modernen Geräte natürlich auch wie klassische Geräte zum einfachen Aufzeichnen und späteren Wiedergeben von Sendungen genutzt werden können, gehen deren Fähigkeiten darüber bei weitem hinaus. Ein häufig genutztes Merkmal eines PVR ist beispielsweise das sogenannte zeitversetzte Fernsehen (Time Shifting), bei dem der Nutzer mit dem Wiedergeben einer Sendung bereits beginnt, während die Aufzeichnung noch läuft. Dank der leistungsfähigen Hardware eines modernen PVR ist die dabei erreichte Bildqualität besser als die eines herkömmlichen VHS oder SVHS Bandgeräts.

Das zeitversetzte Fernsehen erlaubt es dem Nutzer auch, eine zunächst live angesehene Sendung zu "pausieren", etwa um einen Anruf entgegenzunehmen, und die Wiedergabe später fortzusetzen, wobei es sich für den Nutzer so darstellt, als habe er tatsächlich die Live-Ausstrahlung pausiert und später fortgesetzt. Im Hintergrund hat jedoch der Druck des Nutzers auf die "Pause"-Taste seinen PVR veranlaßt, das laufende Programm aufzuzeichnen, und der erneute Druck auf die "Pause"-Taste führt dazu, daß die aufgezeichnete Sendung einerseits weiter aufgezeichnet und andererseits bereits wiedergegeben wird.

Großer Beliebtheit erfreut sich auch die Fähigkeit eines PVR, mit minimaler Verzögerung größere Abschnitte in einer Aufzeichnung überspringen zu können. Häufig wird dies benutzt, um in der Aufzeichnung enthaltene Werbeblöcke bei der Wiedergabe zu überspringen. Um diese Fähigkeit hat sich eine Reihe von Diensten etabliert, die das Auffinden der Grenzen der Werbeblöcke erleichtern, etwa indem der Beginn und das Ende eines Werbeblocks als auf den Beginn einer Sendung bezogene Zeitpunkte als Index zur Aufzeichnung abgelegt werden und somit bei der Wiedergabe ein automatisches Überspringen der Werbung möglich wird.

Neben speziell angepaßten Unterhaltungselektronikgeräten werden zunehmend auch multimedia-fähige PCs mit geeigneter Software als PVR genutzt (bekannt als Home Theater PC, HTPC). Technisch unterscheidet sich ein spezieller PVR von einem PC-PVR kaum; beide weisen einen großen (Platten-) Speicher auf, ausreichend Prozessorleistung und geeignete Videocodecs.

Beide Plattformvarianten sind durch konfigurierbare Software bzw. Firmware in der Lage, dem Nutzer weitere Funktionen zu bieten, etwa die Suche nach Sendungen, die thematisch zu seinen Lieblingssendungen passen. Beiden Plattformvarianten ist gemein, daß die Aufzeichnung lokal beim Nutzer erfolgt und die Menge aufzeichenbarer Sendungen durch den lokalen Plattenspeicher begrenzt ist. Häufig ist es deshalb möglich, aufgezeichnete Sendungen vom internen Speicher des Geräts auf beschreibbare Medien wie (wieder)beschreibbare CD oder DVD zu transferieren. Dies ist aber mit Aufwand verbunden, und nicht zuletzt ist auch der Preis eines PVR erheblich. Und auch PVR leiden unter dem Problem, daß zum parallelen Aufzeichnen mehrer Sendungen auch mehrere PVR benötigt werden. Teurere Multituner-Geräte lösen dieses Problem nur bedingt, da stets weniger Tuner als TV Stationen vorliegen werden und außerdem die - für einen Kanal ausreichend leistungsfähige - Hardware des PVR bei der parallelen Aufzeichnung mehrerer Kanäle an ihre Grenzen stößt.

Um Nutzern alle Vorteile eines PVR bieten zu können, ohne daß diese die Investition in einen PVR tätigen müssen, wurde in dem Whitepaper "Network PVR: Everything on Demand", Jay Schiller, nCube Corporation, erhältlich im Internet unter http://www.ncube.com/pressroom/downloads/nvpr-whitepaper.pdf ein Netzwerk-PVR vorgeschlagen, bei dem Speicher, Kodierlogik und Codecs durch einen Anbieter im Kabelnetz vorgehalten werden. Der Nutzer erhält ein Gerät, mit dem er Sendungen zur Speicherung auswählen und gespeicherte Sendungen abrufen kann, die dann mittels breitbandiger Verbindung in Echtzeit an den Nutzer übertragen werden. Ein solches Gerät kann im Vergleich zu einem PVR oder einem HTPC wesentlich weniger leistungsfähig sein. Gleichzeitig kann der Nutzer praktisch unbegrenzt Speicherplatz auf dem zentralen PVR-Server mieten, während der Betreiber des PVR-Servers nur eine Kopie jeder Sendung vorhalten muß, die dann bei Bedarf an jene Nutzer verteilt wird, die diese Sendung in ihrem (virtuellen) Speicher abgelegt haben.

In einer Fortbildung kann ein solcher Netzwerk-PVR so ausgestaltet sein, daß das "Programmieren" des Netzwerk-PVR durch den Nutzer entfällt und der Nutzer statt dessen auf alle Sendungen seines Programm-Bouquets etwa der letzten 4 Wochen Zugriff hat.

Aufgabe der vorliegenden Erfindung ist es nun, ein Verfahren und einen PVR Server zum Speichern und Wiedergeben von TV-Sendungen anzugeben, die eine verbesserte Verwaltung des zentral beim Betreiber eines Netzwerk-PVR vorzuhaltenden Speicherplatzes ermöglichen.

Diese Aufgabe wird durch den Gegenstand der unabhängigen Ansprüche gelöst.

In einer bevorzugten Ausgestaltung der Erfindung kann vorgesehen werden, dass jene Endgeräte (104) aus dem Index entfernt werden, für welche das weitere Aufbewahren der aufgezeichneten Sendung innerhalb der konfigurierbaren Zeitspanne nicht angefordert oder abgelehnt wurde.

In einer weiteren Ausgestaltung kann vorgesehen werden, dass der PVR Server mit einem Abrechnungssystem gekoppelt wird oder ein Abrechnungssystem in den PVR Server integriert ist, um für das weitere Aufbewahren einer aufgezeichneten Sendung für Endgeräte, an denen das weitere Aufbewahren der aufgezeichneten Sendung angefordert wurde, den Nutzern dieser Endgeräte gesonderte Gebühren zu berechnen.

Vorteilhaft wird durch die Erfindung erreicht, dass der durch eine aufgezeichnete Sendung belegte Speicherplatz freigegeben werden kann, wenn folgende Bedingungen erfüllt sind: nur noch wenige Nutzer haben die Sendung in ihrem virtuellen, persönlichen Archiv, und diese Nutzer reagieren auf einen an ihren Endgeräten angezeigten Löschhinweis bezüglich dieser Sendung innerhalb einer konfigurierbaren Zeitspanne (z.B. 10 Tage) nicht oder nur ablehnend. Das Kriterium "wenige Nutzer" kann definiert werden als eine absolute Zahl von Network-PVR Nutzern, z.B. 100 Nutzer (von beispielsweise insgesamt 10000 Systemnutzern), und zwar unabhängig davon wie viele Nutzer die Sendung überhaupt zur Aufnahme ausgewählt hatten. Oder es wird der Prozentsatz der Nutzer betrachtet, die zum Betrachtungszeitpunkt eine aufgezeichnete Sendung noch in ihrem virtuellen Archiv haben, und zwar bezogen auf die Zahl der Nutzer, die diese Sendung ursprünglich in ihrem Archiv hatten. Hatten beispielsweise 1000 Nutzer (von beispielsweise insgesamt 10000 Systemnutzern) eine Sendung zur Aufzeichnung ausgewählt, und 900 haben diese bereits wieder aus ihrem virtuellen Archiv entfernt, entsprechen die verbleibenden 100 Nutzer 10% der Nutzer, die diese Sendung ursprünglich in ihrem Archiv hatten. Beide Grenzwerte können kombiniert werden.

Ein Betreiber des PVR Servers kann diese Grenzwerte einzeln oder in Kombination so konfigurieren, daß das durchschnittliche Speichervolumen aufbewahrter Sendungen einen bestimmten Wert nicht überschreitet und somit eine optimierte Verwaltung des gespeicherten Materials erreichen.

Im folgenden werden bevorzugte Ausführungsbeispiele der vorliegenden Erfindung im Zusammenhang mit einer Zeichnung näher erläutert.

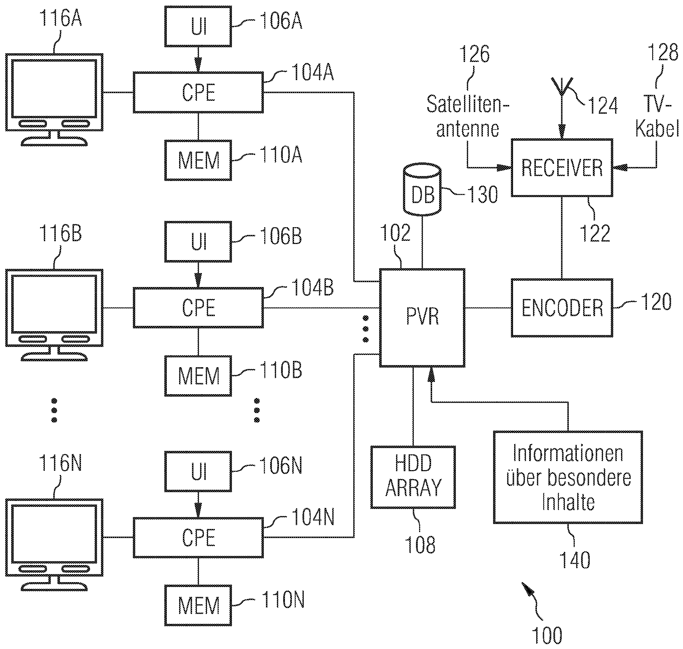

Die einzige Figur zeigt eine Anordnung 100 mit einem Netzwerk-PVR bzw. PVR Server 102 und von diesem versorgten Endgeräten 104A..104N. Der PVR Server 102 empfängt von einem Encoder 120 digital kodierte TV-Kanäle. Der Encoder wiederum empfängt die TV-Kanäle von einem Receiver 122, welcher über terrestrische Antenne 124 und/oder Satellitenantenne 126 und/oder TV-Kabel 128 geeignete TV-Signale empfängt. Der Encoder 120 und der Receiver 122 können dabei als ein Gerät konstruiert sein. Der Encoder 120 nutzt einen Codec wie etwa MPEG2 oder MPEG4 oder davon abgeleitete Codecs, um die zunächst in analoger Form vorliegenden TV-Signale in ein effizientes digitales Datenformat zu überführen. Liegt ein TV-Kanal bereits als digitaler Datenstrom vor, beispielsweise als Digital Video Broadcast DVB (terrestrisch als DVB-T, via Kabel als DVB-C oder via Satellit als DVB-S empfangen), kann der Encoder 120 diesen Datenstrom unmodifiziert an den PVR Server 102 weiterleiten oder vor Weiterleitung modifizieren, beispielsweise durch Anpassen der Bandbreite des Datenstroms an die Bandbreite der Verbindung zu den Endgeräten 104.

Der PVR Server 102 ist mit einem Massenspeicher 108 gekoppelt, beispielsweise mit einem Festplatten-Array bzw. HDD Array. In der Technik sind zahlreiche Methoden bekannt, aus Festplatten redundante Massenspeicher-Arrays aufzubauen, die beim Ausfall einzelner Festplatten dennoch die gespeicherten Daten vollständig ausliefern können. Der Einsatz eines solchen redundanten Arrays, z.B. eines redundanten Arrays aus unabhängigen Festplatten (RAID), ist im Zusammenhang mit der vorliegenden Erfindung von Vorteil, da ein PVR Server 102 und der angeschlossene Massenspeicher 108 sämtliche Daten der TV-Aufzeichnungen zahlreicher Nutzer speichert.

Die Nutzer-Endgeräte 104 sind mit dem PVR Server 102 beispielsweise über das TV-Kabelnetz oder über eine DSL-Verbindung verbunden. Moderne Codecs erlauben eine akzeptable Videoqualität mit Übertragungsraten ab wenigen hundert kbit/s. Mit den technisch über DSL-Verbindungen möglichen Bandbreiten von mehreren Mbit/s sind zwei oder mehr parallele Videoströme (für verschiedene Wiedergabegeräte im Haushalt des Nutzers) oder ein einzelner Videostrom mit hoher Qualität denkbar.

Die Endgeräte 104 können mit lokalem Speicher 110 ausgestattet oder gekoppelt sein, der beispielsweise als herkömmliche Festplatte und/oder als Flash-Speicher und/oder als RAM ausgebildet sein kann. Natürlich sind auch Sonderformen wie im Flash-Speicherkartenformat vorliegende Kleinstfestplatten denkbar. Flash-Speicher hat dabei den Vorteil, daß eine Speicherung der Daten unabhängig vom Anliegen einer Versorgungsspannung möglich ist und gleichzeitig besonders leise Endgeräte 104 ermöglicht werden, da Flash-Speicher keine rotierenden oder andere mechanische Teile aufweist.

Der Speicher 110 kann dabei fest mit dem Endgerät 104 gekoppelt oder auswechselbar gestaltet sein. An den Speicher 110 der Endgeräte 104 bestehen geringere Anforderungen als an den Massenspeicher 108 hinsichtlich Redundanz und Ausfallsicherheit. Der Endgeräte-Speicher 110 kann dazu dienen, Nutzerpräferenzen und andere Einstellungen zu speichern, sofern diese nicht zentral durch den PVR Server 102 verwaltet werden.

Bei dem Endgerät bzw. CPE 104 kann es sich um eine Set-Top-Box handeln, die an ein Bildwiedergabegerät 116 angeschlossen wird. Alternativ kann das Endgerät 104 in das Bildwiedergabegerät 116 integriert sein. Das Bildwiedergabegerät 116 kann ein herkömmlicher Fernseher sein. Alternativ kann es sich um einen Monitor handeln, der selbst keinen TV-Tuner aufweist. Das Endgerät 104 weist eine Benutzerschnittstelle 106 auf, die dem Nutzer beispielsweise dazu dient, sein persönliches, virtuelles Archiv aufgezeichneter TV-Sendungen, ggf. sein persönliches TV-Programm und andere persönliche Einstellungen zu verwalten. Diese Benutzerschnittstelle kann, wie auf dem Gebiet der Set-Top-Boxen üblich, so realisiert sein, daß der Nutzer Eingaben über eine Fernbedienung macht und Ausgaben über das Bildwiedergabegerät 116 angezeigt bekommt.

Die Eingaben eines Nutzers betreffend die Aufzeichnung von TV-Sendungen werden an den PVR Server 102 gesendet, der aus den empfangenen Daten Datensätze erzeugt, welche die aufzuzeichnende TV-Sendung(en) kennzeichnen. Mittels eines Schedulers wird die entsprechende TV-Sendung zur Aufnahme vorgesehen. Eine Datenbank, beispielsweise eine Nutzerdatenbank, verwaltet die von einem Nutzer zur Aufnahme vorgesehenen Sendungen und prüft Berechtigungen des Nutzers, etwa ob der Nutzer den entsprechenden TV-Kanal abonniert hat.

Wird eine TV-Sendung ausgestrahlt, prüft der PVR Server 102 in Zusammenwirken mit der Datenbank, ob ein (es genügt ein einziger) Nutzer diese Sendung zur Aufnahme vorgesehen hat. Ist dies der Fall, wird die Aufnahme vorgenommen. Dabei können die bei der Aufzeichnung anfallenden Daten vollständig im Speicher 108 des PVR Servers abgelegt werden oder in einen lokalen und einen zentralen Teil aufgeteilt und entsprechend im Speicher 110 des Endgeräts 104 oder im Massenspeicher 108 abgelegt werden. Falls an mehreren Endgeräten 104 die Sendung zur Aufnahme programmiert wurde, wird eine gemeinsame Kopie vorgesehen, die im Speicher 108 des PVR Servers 102 abgelegt wird. In der Datenbank 130 wird anschließend für jedes Endgerät, welches die Sendung zur Aufzeichnung vorgesehen hatte, eine Adressierungsinformation auf die gemeinsame Kopie hinterlegt, etwa ein Dateiname oder sonstige Indexinformationen. Ein solcher nutzerbezogener Eintrag kann in Form von Metadaten weitere Informationen zur Sendung enthalten, etwa ein Verfallsdatum oder die Positionen etwaiger Werbeblöcke. Ein so erzeugter Index erlaubt es auch, festzustellen, welche Endgeräte auf eine bestimmte Sendung zugreifen können, d.h. im Archiv welcher Nutzer sich eine bestimmte Sendung befindet.

Eine Wiedergabe erfolgt, indem ein Nutzer mittels Nutzerschnittstelle 106 am Endgerät 104 das Archiv verfügbarer Sendungen anfordert, welches von der Datenbank 130 an das Endgerät 104 zur Darstellung mittels der Nutzerschnittstelle, beispielsweise auf dem Bildschirm 116, gesendet wird. Aus dem Archiv kann der Nutzer eine Aufzeichnung auswählen und durch entsprechende Eingabe die Wiedergabe starten. Das Endgerät sendet diese Anforderung an den PVR Server 102, welcher mittels der Datenbank 130 die entsprechenden Video-Daten im Speicher 108 lokalisiert und diese als Video-Stream an das entsprechende Endgerät 104 sendet.

Beim Verwalten seines Archivs kann ein Nutzer auch mittels Nutzerschnittstelle 106 Sendungen aus seinem Archiv löschen.

Ein solcher Löschvorgang führt zunächst dazu, daß in der Datenbank 130 aus einem dem Nutzer zugeordneten Datensatz der Verweis auf eine "gelöschte" Sendung entfernt wird mit der Folge, daß diese Sendung im Archiv des Nutzers nicht mehr angezeigt wird und der Nutzer auch keine Möglichkeit mehr hat, diese Sendung mittels seines Endgeräts 104 wiederzugeben. Ein Löschen der tatsächlichen Bilddaten im Speicher 108 kann dann und nur dann stattfinden, wenn der letzte Nutzer, der eine Sendung im Archiv hat, diese Sendung löscht. In allen anderen Fällen muß die aufgezeichnete Sendung aufbewahrt werden, und es werden nur die entsprechenden Index- bzw. Datenbankeinträge gelöscht.

Erfindungsgemäß wird vorgesehen, daß für jede aufgezeichnete Sendung überwacht wird, wieviele Nutzer diese Sendung (noch) in ihrem Archiv haben. Dabei kann ein erster Grenzwert N als eine absolute Anzahl von Nutzern definiert werden, beispielsweise N=100 Nutzer. Haben weniger als N Nutzer eine bestimmte Sendung in ihrem Archiv, wird diesen Nutzern ein Löschhinweis angezeigt, der darauf hinweist, daß die Sendung aus dem Archiv gelöscht wird, wenn der Nutzer nicht innerhalb einer bestimmten Zeitspanne (z.B. 10 Tage) ausdrücklich das weitere Aufbewahren der Sendung anfordert. Das weitere Aufbewahren der Sendung kann durch einen Betreiber des Netzwerk-PVR mit Gebühren beaufschlagt werden. Entscheidet sich wenigstens einer der Nutzer für das weitere Aufbewahren, wird die Sendung weiter aufbewahrt, und es kann nach Ablauf einer bestimmten Zeit (z.B. vier Wochen) erneut automatisch nachgefragt werden, ob das weitere Aufbewahren weiterhin gewünscht wird. Beim erneuten Nachfragen kann ein anderer Grenzwert N' < N als Auslösekriterium genutzt werden. In allen anderen Fällen, d.h. wenn sich nicht wenigstens einer der Nutzer ausdrücklich für das weitere Aufbewahren entscheidet, wird nach Ablauf der bestimmten Zeitspanne (z.B. 10 Tage) die Sendung aus den Archiven der verbleibenden Nutzer entfernt und aus dem Speicher 108 gelöscht, wodurch wieder Speicher zur Aufzeichnung von Sendungen zur Verfügung steht.

Alternativ oder zusätzlich kann als Kriterium für das Löschen einer Sendung überwacht werden, wieviele Nutzer diese Sendung ursprünglich zur Aufnahme vorgesehen hatten und wieviele Nutzer aus dieser Gruppe diese Sendung zum Betrachtungszeitpunkt noch in ihren virtuellen Archiven aufbewahren. Ein zweiter Grenzwert kann dann als Prozent der Nutzer definiert werden, die - bezogen auf die Zahl der Nutzer, welche diese Sendung ursprünglich zur Aufnahme vorgesehen hatten - diese Sendung noch in ihrem Archiv aufbewahren. Gegenüber der Betrachtung einer absoluten Nutzerzahl erlaubt dieser zweite Grenzwert, der die Zahl der an einer bestimmten Sendung interessierten Nutzer berücksichtigt, einen Löschhinweis an die verbliebenen Nutzer auch dann, wenn zwar immer noch eine große absolute Zahl von Nutzern die Sendung in ihren Archiven aufbewahrt, diese Zahl aber klein ist im Vergleich zur Zahl der Nutzer, welche diese Sendung insgesamt in ihren Archiven hatte. Andersherum erlaubt dieser zweite Grenzwert auch eine differenziertere Steuerung im Fall von Sendungen, die absolut nur eine geringe Zahl von Nutzern ansprechen (z.B. weniger als N Nutzer), da bei Auswertung nur der absoluten Zahl in diesem Fall der Löschhinweis unmittelbar nach der Aufzeichnung auftreten könnte. Um zu verhindern, daß bei einer sehr geringen Anzahl von Interessenten an einer Sendung diese Sendung auf immer im System verbleibt, weil der prozentuale zweite Grenzwert nie erreicht wird, kann durch Kombination mit dem ersten Grenzwert, der dann sehr niedrig gewählt wird, erreicht werden, daß ein Löschhinweis auch dann erzeugt wird, wenn das prozentuale Kriterium nicht erfüllt wird. Dabei kann das erstmalige Prüfen des ersten Grenzwertes stattfinden, wenn eine Sendung bereits für eine bestimmte Zeitspanne im Speicher 108 abgelegt war, beispielsweise 2 Wochen.

Es kann vorgesehen werden, daß die Überwachung des ersten und/oder zweiten Grenzwertes unmittelbar nach Aufzeichnung der Sendung das erste Mal durchgeführt wird und dann in bestimmten Zeitabständen stattfindet, etwa aller 2 Wochen. Alternativ kann vorgesehen werden, die erste Überwachung des ersten und/oder zweiten Grenzwertes erst eine gewisse Zeitspanne (z.B. 2 Wochen) nach der Aufzeichnung durchzuführen. In einer weiteren Alternative kann vorgesehen werden, daß für eine bestimmte Sendung die Überprüfung jedesmal dann stattfindet, wenn ein Nutzer diese Sendung aus seinem Archiv entfernt, wobei zusätzlich vorgesehen werden kann, daß der erste Grenzwert grundsätzlich aller 2 Wochen für alle aufgezeichneten Sendungen überprüft wird.

Die Implementierung der Überwachung des ersten oder/und zweiten Grenzwertes sowie die zeitliche Abfolge der Schritte Aufzeichnung - erste Überprüfung eines der Grenzwerte und fallweises Anzeigen des Löschhinweises - weitere Überprüfungen mit ggf. modifizierten Grenzwerten und fallweises Anzeigen des Löschhinweises kann durch geeignete Softwaremittel erfolgen, die vorzugsweise in programmierbaren Mitteln des PVR Servers 102 (nicht dargestellt) ablaufen und die Endgeräte 104, den Speicher 108 und die Datenbank 130 geeignet beeinflussen bzw. abfragen. Das Erstellen solcher Softwaremittel ist anhand der vorliegenden detaillierten Beschreibung der Erfindung für den Fachmann ohne eigenes erfinderisches Handeln möglich.

## Patentansprüche

1. PVR Server (102) zum Speichern und Wiedergeben von TV-Sendungen, der folgendes aufweist:
- Mittel zum Empfang einer Vielzahl digital kodierter TV-Kanäle,
- Mittel zum Versorgen einer Vielzahl von Endgeräten (104), wobei die Endgeräte (104) Mittel (106) zum Auswählen aufzuzeichnender TV-Sendungen und Mittel zum Übertragen der Auswahl an den PVR Server (102) aufweisen,
- Speichermittel (108) zum Speichern aufzuzeichnender TV-Sendungen als aufgezeichnete Sendungen und
- Mittel zum Verbinden mit einer Datenbank (130) zum Speichern eines Index, der für alle aufgezeichneten Sendungen anzeigt, für welche der Endgeräte (104) eine aufgezeichnete Sendung in den Speichermitteln (108) aufbewahrt wird,
- Mittel zum Ermitteln einer Anzahl von Endgeräten (104), für welche eine aufgezeichnete Sendung in den Speichermitteln (108) aufbewahrt wird;
- Mittel zum Erzeugen eines Löschhinweises zur Anzeige an Endgeräten (104), für welche eine aufgezeichnete Sendung in den Speichermitteln (108) aufbewahrt wird, falls die aufgezeichnete Sendung nur noch für eine absolute Zahl von Endgeräten (104) aufbewahrt wird, welche kleiner als ein erster Grenzwert (N) ist, oder falls die aufgezeichnete Sendung nur noch für einen Prozentsatz von Endgeräten (104) bezogen auf eine Gesamtzahl von Endgeräten (104), für welche die aufgezeichnete Sendung zur Aufzeichnung ausgewählt war, aufbewahrt wird, welcher kleiner als ein zweiter Grenzwert ist; und
- Mittel zum Löschen einer aufgezeichneten Sendung, falls innerhalb einer konfigurierbaren Zeitspanne an keinem der Endgeräte (104), an welchen der Löschhinweis angezeigt wurde, das weitere Aufbewahren der aufgezeichneten Sendung angefordert wurde.

2. PVR Server (102) zum Speichern und Wiedergeben von TV-Sendungen, der folgendes aufweist:
- Mittel zum Empfang einer Vielzahl digital kodierter TV-Kanäle,
- Mittel zum Versorgen einer Vielzahl von Endgeräten (104), wobei die Endgeräte (104) Mittel (106) zum Auswählen aufzuzeichnender TV-Sendungen und Mittel zum Übertragen der Auswahl an den PVR Server (102) aufweisen,
- Speichermittel (108) zum Speichern aufzuzeichnender TV-Sendungen als aufgezeichnete Sendungen und
- Mittel zum Verbinden mit einer Datenbank (130) zum Speichern eines Index, der für alle aufgezeichneten Sendungen anzeigt, für welche der Endgeräte (104) eine aufgezeichnete Sendung in den Speichermitteln (108) aufbewahrt wird,
- Mittel zum Ermitteln einer Anzahl von Endgeräten (104), für welche eine aufgezeichnete Sendung in den Speichermitteln (108) aufbewahrt wird;
- Mittel zum Erzeugen eines Löschhinweises zur Anzeige an Endgeräten (104), für welche eine aufgezeichnete Sendung in den Speichermitteln (108) aufbewahrt wird, falls die aufgezeichnete Sendung nur noch für eine absolute Zahl von Endgeräten (104) aufbewahrt wird, welche kleiner als ein erster Grenzwert (N) ist,
und falls die aufgezeichnete Sendung nur noch für einen Prozentsatz von Endgeräten (104) bezogen auf eine Gesamtzahl von Endgeräten (104),
für welche die aufgezeichnete Sendung zur Aufzeichnung ausgewählt war, aufbewahrt wird, welcher kleiner als ein zweiter Grenzwert ist; und
- Mittel zum Löschen einer aufgezeichneten Sendung, falls innerhalb einer konfigurierbaren Zeitspanne an keinem der Endgeräte (104), an welchen der Löschhinweis angezeigt wurde, das weitere Aufbewahren der aufgezeichneten Sendung angefordert wurde.

3. PVR Server (102) nach einem der Ansprüche 1 oder 2, der ferner Mittel zum Entfernen jener Endgeräte (104) aus dem Index aufweist, für welche das weitere Aufbewahren der aufgezeichneten Sendung innerhalb der konfigurierbaren Zeitspanne nicht angefordert oder abgelehnt wurde.

4. PVR Server (102) nach einem der vorstehenden Ansprüche, der ferner Mittel zur Kopplung mit einem Abrechnungssystem aufweist sowie Mittel zum Vergebühren des weiteren Aufbewahrens einer aufgezeichneten Sendung für Endgeräte (104), an denen das weitere Aufbewahren der aufgezeichneten Sendung angefordert wurde.

5. Verfahren zum Speichern und Wiedergeben von TV-Sendungen, mit den Schritten
- Empfangen einer Vielzahl digital kodierter TV-Kanäle,
- Auswählen aufzuzeichnender TV-Sendungen durch Endgeräte (104),
- Speichern aufzuzeichnender TV-Sendungen als aufgezeichnete Sendungen in Speichermitteln (108) eines PVR Servers (102),
- Speichern eines Index, der für alle aufgezeichneten Sendungen anzeigt, für welche der Endgeräte (104) eine aufgezeichnete Sendung in den Speichermitteln (108) aufbewahrt wird,
- Ermitteln einer Anzahl von Endgeräten (104), für welche eine aufgezeichnete Sendung in den Speichermitteln (108) aufbewahrt wird;
- Erzeugen eines Löschhinweises zur Anzeige an Endgeräten (104), für welche eine aufgezeichnete Sendung in den Speichermitteln (108) aufbewahrt wird, falls die aufgezeichnete Sendung nur noch für eine absolute Zahl von Endgeräten (104) aufbewahrt wird, welche kleiner als ein erster Grenzwert (N) ist, oder falls die aufgezeichnete Sendung nur noch für einen Prozentsatz von Endgeräten (104) bezogen auf eine Gesamtzahl von Endgeräten (104), für welche die aufgezeichnete Sendung zur Aufzeichnung ausgewählt war, aufbewahrt wird, welcher kleiner als ein zweiter Grenzwert ist; und
- Löschen einer aufgezeichneten Sendung, falls innerhalb einer konfigurierbaren Zeitspanne an keinem der Endgeräte (104), an welchen der Löschhinweis angezeigt wurde, das weitere Aufbewahren der aufgezeichneten Sendung angefordert wurde.

6. Verfahren zum Speichern und Wiedergeben von TV-Sendungen, mit den Schritten
- Empfangen einer Vielzahl digital kodierter TV-Kanäle,
- Auswählen aufzuzeichnender TV-Sendungen durch Endgeräte (104),
- Speichern aufzuzeichnender TV-Sendungen als aufgezeichnete Sendungen in Speichermitteln (108) eines PVR Servers (102),
- Speichern eines Index, der für alle aufgezeichneten Sendungen anzeigt, für welche der Endgeräte (104) eine aufgezeichnete Sendung in den Speichermitteln (108) aufbewahrt wird,
- Ermitteln einer Anzahl von Endgeräten (104), für welche eine aufgezeichnete Sendung in den Speichermitteln (108) aufbewahrt wird;
- Erzeugen eines Löschhinweises zur Anzeige an Endgeräten (104), für welche eine aufgezeichnete Sendung in den Speichermitteln (108) aufbewahrt wird, falls die aufgezeichnete Sendung nur noch für eine absolute Zahl von Endgeräten (104) aufbewahrt wird, welche kleiner als ein erster Grenzwert (N) ist, und falls die aufgezeichnete Sendung nur noch für einen Prozentsatz von Endgeräten (104) bezogen auf eine Gesamtzahl von Endgeräten (104), für welche die aufgezeichnete Sendung zur Aufzeichnung ausgewählt war, aufbewahrt wird, welcher kleiner als ein zweiter Grenzwert ist; und
- Löschen einer aufgezeichneten Sendung, falls innerhalb einer konfigurierbaren Zeitspanne an keinem der Endgeräte (104), an welchen der Löschhinweis angezeigt wurde, das weitere Aufbewahren der aufgezeichneten Sendung angefordert wurde.

7. Verfahren nach einem der Ansprüche 5 oder 6, bei dem ferner jene Endgeräte (104) aus dem Index entfernt werden, für welche das weitere Aufbewahren der aufgezeichneten Sendung innerhalb der konfigurierbaren Zeitspanne nicht angefordert oder abgelehnt wurde.

8. Verfahren nach einem der Ansprüche 5, 6 oder 7, bei dem ferner das Vergebühren des weiteren Aufbewahrens einer aufgezeichneten Sendung für Endgeräte (104), an denen das weitere Aufbewahren der aufgezeichneten Sendung angefordert wurde, vorgesehen ist.

## Claims

1. PVR server (102) for storing and replaying TV broadcasts, said PVR server comprising the following:
- means for receiving a multiplicity of digitally encoded TV channels,
- means for supplying a multiplicity of terminals (104), wherein the terminals (104) comprise means (106) for selecting TV broadcasts to be recorded and means for transmitting the selection to the PVR server (102),
- storage means (108) for storing TV broadcasts to be recorded as recorded broadcasts, and
- means for connection to a database (130) for storing an index which indicates, for all recorded broadcasts, for which of the terminals (104) a recorded broadcast is stored in the storage means (108),
- means for determining a number of terminals (104) for which a recorded broadcast is stored in the storage means (108);
- means for generating an erasure indication for display on terminals (104) for which a recorded broadcast is stored in the storage means (108) if the recorded broadcast is stored only for an absolute number of terminals (104) which is less than a first limit value (N), or if the recorded broadcast is stored only for a percentage of terminals (104) relative to a total number of terminals (104) for which the recorded broadcast was selected for recording, which percentage is less than a second limit value; and
- means for erasing a recorded broadcast if, within a configurable time period, the further storage of the recorded broadcast was requested at none of the terminals (104) on which the erasure indication was displayed.

2. PVR server (102) for storing and replaying TV broadcasts, said PVR server comprising the following:
- means for receiving a multiplicity of digitally encoded TV channels,
- means for supplying a multiplicity of terminals (104), wherein the terminals (104) comprise means (106) for selecting TV broadcasts to be recorded and means for transmitting the selection to the PVR server (102),
- storage means (108) for storing TV broadcasts to be recorded as recorded broadcasts, and
- means for connection to a database (130) for storing an index which indicates, for all recorded broadcasts, for which of the terminals (104) a recorded broadcast is stored in the storage means (108),
- means for determining a number of terminals (104) for which a recorded broadcast is stored in the storage means (108);
- means for generating an erasure indication for display on terminals (104) for which a recorded broadcast is stored in the storage means (108) if the recorded broadcast is stored only for an absolute number of terminals (104) which is less than a first limit value (N),
- and if the recorded broadcast is stored only for a percentage of terminals (104) relative to a total number of terminals (104)
- for which the recorded broadcast was selected for recording, which percentage is less than a second limit value; and
- means for erasing a recorded broadcast if, within a configurable time period, the further storage of the recorded broadcast was requested at none of the terminals (104) on which the erasure indication was displayed.

3. PVR server (102) according to either of Claims 1 and 2, which furthermore comprises means for removing from the index those terminals (104) for which the further storage of the recorded broadcast was not requested or was rejected within the configurable time period.

4. PVR server (102) according to any of the preceding claims, which furthermore comprises means for coupling to an accounting system and means for charging for the further storage of a recorded broadcast for terminals (104) at which the further storage of the recorded broadcast was requested.

5. Method for storing and replaying TV broadcasts, comprising the steps of
- receiving a multiplicity of digitally encoded TV channels,
- selecting TV broadcasts to be recorded by means of terminals (104),
- storing TV broadcasts to be recorded as recorded broadcasts in storage means (108) of a PVR server (102),
- storing an index which indicates, for all recorded broadcasts, for which of the terminals (104) a recorded broadcast is stored in the storage means (108),
- determining a number of terminals (104) for which a recorded broadcast is stored in the storage means (108);
- generating an erasure indication for display on terminals (104) for which a recorded broadcast is stored in the storage means (108) if the recorded broadcast is stored only for an absolute number of terminals (104) which is less than a first limit value (N), or if the recorded broadcast is stored only for a percentage of terminals (104) relative to a total number of terminals (104) for which the recorded broadcast was selected for recording, which percentage is less than a second limit value; and
- erasing a recorded broadcast if, within a configurable time period, the further storage of the recorded broadcast was requested at none of the terminals (104) on which the erasure indication was displayed.

6. Method for storing and replaying TV broadcasts, comprising the steps of
- receiving a multiplicity of digitally encoded TV channels,
- selecting TV broadcasts to be recorded by means of terminals (104),
- storing TV broadcasts to be recorded as recorded broadcasts in storage means (108) of a PVR server (102),
- storing an index which indicates, for all recorded broadcasts, for which of the terminals (104) a recorded broadcast is stored in the storage means (108),
- determining a number of terminals (104) for which a recorded broadcast is stored in the storage means (108);
- generating an erasure indication for display on terminals (104) for which a recorded broadcast is stored in the storage means (108) if the recorded broadcast is stored only for an absolute number of terminals (104) which is less than a first limit value (N), and if the recorded broadcast is stored only for a percentage of terminals (104) relative to a total number of terminals (104) for which the recorded broadcast was selected for recording, which percentage is less than a second limit value; and
- erasing a recorded broadcast if, within a configurable time period, the further storage of the recorded broadcast was requested at none of the terminals (104) on which the erasure indication was displayed.

7. Method according to either of claims 5 and 6, wherein furthermore those terminals (104) for which the further storage of the recorded broadcast was not requested or was rejected within the configurable time period are removed from the index.

8. Method according to any of claims 5, 6 and 7, wherein provision is furthermore made for charging for the further storage of a recorded broadcast for terminals (104) at which the further storage of the recorded broadcast was requested.

## Revendications

1. Serveur PVR (102) pour stocker et restituer des émissions TV et comportant :
- des moyens pour recevoir une pluralité de canaux TV codés numériquement ;
- des moyens pour alimenter une pluralité de terminaux (104), les terminaux (104) comportant des moyens (106) pour sélectionner des émissions TV à enregistrer et des moyens pour transmettre la sélection au serveur PVR (102) ;
- des moyens de stockage (108) pour sauvegarder des émissions TV à enregistrer en tant qu'émissions enregistrées et
- des moyens pour établir une liaison avec une base de données (130) pour sauvegarder un index qui indique, pour toutes les émissions enregistrées, pour lesquels des terminaux (104) une émission enregistrée est conservée dans les moyens de stockage (108) ;
- des moyens pour déterminer un nombre de terminaux (104) pour lesquels une émission enregistrée est conservée dans les moyens de stockage (108) ;
- des moyens pour générer une information de suppression à afficher sur des terminaux (104) pour lesquels une émission enregistrée est conservée dans les moyens de stockage (108) si l'émission enregistrée n'est plus conservée que pour un nombre absolu de terminaux (104) qui est inférieur à une première valeur seuil (N) ou si l'émission enregistrée n'est plus conservée que pour un pourcentage de terminaux (104) rapporté à un nombre total de terminaux (104) pour lesquels l'émission enregistrée était sélectionnée pour être enregistrée et inférieur à une deuxième valeur seuil et
- des moyens pour supprimer une émission enregistrée si la poursuite de la conservation de l'émission enregistrée n'a été demandée dans un laps de temps configurable à aucun des terminaux (104) sur lesquels l'information de suppression a été affichée.

2. Serveur PVR (102) pour stocker et restituer des émissions TV et comportant :
- des moyens pour recevoir une pluralité de canaux TV codés numériquement ;
- des moyens pour alimenter une pluralité de terminaux (104), les terminaux (104) comportant des moyens (106) pour sélectionner des émissions TV à enregistrer et des moyens pour transmettre la sélection au serveur PVR (102) ;
- des moyens de stockage (108) pour sauvegarder des émissions TV à enregistrer en tant qu'émissions enregistrées et
- des moyens pour établir une liaison avec une base de données (130) pour sauvegarder un index qui indique, pour toutes les émissions enregistrées, pour lesquels des terminaux (104) une émission enregistrée est conservée dans les moyens de stockage (108) ;
- des moyens pour déterminer un nombre de terminaux (104) pour lesquels une émission enregistrée est conservée dans les moyens de stockage (108) ;
- des moyens pour générer une information de suppression à afficher sur des terminaux (104) pour lesquels une émission enregistrée est conservée dans les moyens de stockage (108) si l'émission enregistrée n'est plus conservée que pour un nombre absolu de terminaux (104) qui est inférieur à une première valeur seuil (N) et si l'émission enregistrée n'est plus conservée que pour un pourcentage de terminaux (104) rapporté à un nombre total de terminaux (104) pour lesquels l'émission enregistrée était sélectionnée pour être enregistrée et inférieur à une deuxième valeur seuil et
- des moyens pour supprimer une émission enregistrée si la poursuite de la conservation de l'émission enregistrée n'a été demandée dans un laps de temps configurable à aucun des terminaux (104) sur lesquels l'information de suppression a été affichée.

3. Serveur PVR (102) selon l'une des revendications 1 ou 2, comportant en outre des moyens pour supprimer de l'index les terminaux (104) pour lesquels la poursuite de la conservation de l'émission enregistrée n'a été ni demandée ni refusée dans le laps de temps configurable.

4. Serveur PVR (102) selon l'une des revendications précédentes, lequel comporte en outre des moyens d'accouplement à un système de facturation et des moyens de facturation de la poursuite de la conservation d'une émission enregistrée pour des terminaux (104) sur lesquels a été demandée la poursuite de la conservation de l'émission enregistrée.

5. Procédé de stockage et de restitution d'émissions TV, comportant les étapes suivantes :
- réception d'une pluralité de canaux TV codés numériquement ;
- sélection, par des terminaux (104), d'émissions TV à enregistrer ;
- stockage d'émissions TV à enregistrer en tant qu'émissions enregistrées dans des moyens de stockage (108) d'un serveur PVR (102) ;
- stockage d'un index qui indique, pour toutes les émissions enregistrées, pour lesquels des terminaux (104) une émission enregistrée est conservée dans les moyens de stockage (108) ;
- détermination d'un nombre de terminaux (104) pour lesquels une émission enregistrée est conservée dans les moyens de stockage (108) ;
- génération d'une information de suppression à afficher sur des terminaux (104) pour lesquels une émission enregistrée est conservée dans les moyens de stockage (108) si l'émission enregistrée n'est plus conservée que pour un nombre absolu de terminaux (104) qui est inférieur à une première valeur seuil (N) ou si l'émission enregistrée n'est plus conservée que pour un pourcentage de terminaux (104) rapporté à un nombre total de terminaux (104) pour lesquels l'émission enregistrée était sélectionnée pour être enregistrée et inférieur à une deuxième valeur seuil et
- suppression d'une émission enregistrée si la poursuite de la conservation de l'émission enregistrée n'a été demandée dans un laps de temps configurable à aucun des terminaux (104) sur lesquels l'information de suppression a été affichée.

6. Procédé de stockage et de restitution d'émissions TV, comportant les étapes suivantes :
- réception d'une pluralité de canaux TV codés numériquement ;
- sélection, par des terminaux (104), d'émissions TV à enregistrer ;
- stockage d'émissions TV à enregistrer en tant qu'émissions enregistrées dans des moyens de stockage (108) d'un serveur PVR (102) ;
- stockage d'un index qui indique, pour toutes les émissions enregistrées, pour lesquels des terminaux (104) une émission enregistrée est conservée dans les moyens de stockage (108) ;
- détermination d'un nombre de terminaux (104) pour lesquels une émission enregistrée est conservée dans les moyens de stockage (108) ;
- génération d'une information de suppression à afficher sur des terminaux (104) pour lesquels une émission enregistrée est conservée dans les moyens de stockage (108) si l'émission enregistrée n'est plus conservée que pour un nombre absolu de terminaux (104) qui est inférieur à une première valeur seuil (N) et si l'émission enregistrée n'est plus conservée que pour un pourcentage de terminaux (104) rapporté à un nombre total de terminaux (104) pour lesquels l'émission enregistrée était sélectionnée pour être enregistrée et inférieur à une deuxième valeur seuil et
- suppression d'une émission enregistrée si la poursuite de la conservation de l'émission enregistrée n'a été demandée dans un laps de temps configurable à aucun des terminaux (104) sur lesquels l'information de suppression a été affichée.

7. Procédé selon l'une des revendications 5 ou 6, selon lequel sont supprimés de l'index les terminaux (104) pour lesquels la poursuite de la conservation de l'émission enregistrée n'a été ni demandée ni refusée dans le laps de temps configurable.

8. Procédé selon l'une des revendications 5, 6 ou 7, selon lequel est en outre prévue la facturation de la poursuite de la conservation d'une émission enregistrée pour des terminaux (104) sur lesquels a été demandée la poursuite de la conservation de l'émission enregistrée.
